# EUROPEAN PATENT SPECIFICATION

(11) **EP 3 358 220 B1**
(45) Date of publication and mention of the grant of the patent: **10.07.2019**
(21) Application number: 18151029.8
(22) Date of filing: 10.01.2018
(51) Int. Cl.: F16H 15/28, F16H 15/52

(54) **CONTINUOUSLY VARIABLE TRANSMISSION MECHANISM**
STUFENLOSER GETRIEBEMECHANISMUS
MÉCANISME DE TRANSMISSION VARIABLE EN CONTINU

(30) Priority: 07.02.2017 TW 106103873
(43) Date of publication of application: 08.08.2018
(73) Proprietor: Motive Power Industry Co., Ltd., Dacun Township, Changhua County 515 (TW)
(72) Inventor: CHENG, Hsin-Lin, 515 CHANGHUA COUNTY (TW); TENG, Ching-Chung, 515 CHANGHUA COUNTY (TW)
(74) Representative: Gauchet, Fabien Roland

(56) References cited:
- JP-A- H07 133 857
- US-A- 2 061 895
- US-A1- 2014 274 551

## Description

### FIELD OF THE INVENTION

The present invention relates to continuously variable transmission mechanisms and, more particularly, to a continuously variable transmission mechanism which is compact and capable of not only achieving large continuously variable transmission ranges and high transmission efficiency but also changing speed without causing jerks.

### BACKGROUND OF THE INVENTION

To adjust speed and reduce gasoline consumption, every conventional vehicle is equipped with a gear shifting mechanism. The conventional gear shifting mechanism essentially comprises either a gear train, or a combination of a gear train and oil channels, leading to disadvantages, including complicated structure, taking up much space, small gear shifting ranges, and great transmission loss, not to mention that the gear shifting process is likely to cause the vehicle to jerk. In an attempt to over the aforesaid disadvantages, the industrial sector developed a continuous gear shifting mechanism characterized by two grooved wheels operating in conjunction with a V-shaped belt. The grooved wheels and the V-shaped belt are overly large, but gear shifting ranges are overly small. Examples of continuously variable transmission mechanisms are disclosed in US 3,407,687 and WO 2013/109723 A1. Therefore, it is important to develop a continuously variable transmission mechanism which is compact and capable of not only achieving large continuously variable transmission ranges and high transmission efficiency but also changing speed without causing jerks.

Document JPH07-133857 discloses a continuously variable transmission mechanism according to the preamble of claim 1.

### SUMMARY OF THE INVENTION

In view of the aforesaid drawbacks of the prior art, the inventor of the present invention conceived room for improvement in the prior art and thus conducted extensive researches and experiments according to the inventor's years of experience in the related industry, and finally developed a continuously variable transmission mechanism which is compact and capable of not only achieving large continuously variable transmission ranges and high transmission efficiency but also changing speed without causing jerks.

The present invention provides a continuously variable transmission mechanism, comprising: a speed-changing frame having a plurality of receiving holes, a plurality of cruciform guide slots, and a plurality of guide slots, the receiving holes being intermediate and arranged annularly, the cruciform guide slots being outermost and arranged annularly, and the guide slots being innermost and arranged annularly, wherein the receiving holes are each disposed between, and in communication with, a corresponding one of the cruciform guide slots and a corresponding one of the guide slots; a plurality of speed-changing units each having a speed-changing sphere, a speed-changing rod, and a speed-changing slide bar, with the speed-changing rod movably, penetratingly disposed at the speed-changing sphere, the speed-changing slide bar perpendicularly connected to an end of the speed-changing rod, the end exposed from an end portion of the speed-changing sphere, and the speed-changing spheres movably received in the receiving holes, respectively, with each said speed-changing sphere exposed from two open sides of the corresponding receiving hole, wherein the speed-changing slide bars and the speed-changing rods are exposed from end portions of the speed-changing spheres and slide within the cruciform guide slots, respectively, whereas the speed-changing rods are exposed from other end portions of the speed-changing spheres and slide within the guide slots, respectively; two oblique support units each having an oblique support ring, a truncated conical ball ring, and an oblique supporter, the oblique support rings each having an outward-tilted support annular surface and an inward-tilted clamping annular surface, the oblique supporters each having an outward-tilted clamping annular surface and connected to two sides of the speed-changing frame, and the truncated conical ball rings each being clamped between a corresponding one of the inward-tilted clamping annular surfaces and a corresponding one of the outward-tilted clamping annular surfaces, wherein the outward-tilted support annular surfaces support the speed-changing spheres from two open sides of a corresponding one of the receiving holes, respectively; a power input rotator having an inward-tilted power input clamping annular surface; and a power output rotator having an inward-tilted power output clamping annular surface, wherein the inward-tilted power input clamping annular surface and the inward-tilted power output clamping annular surface clamp the speed-changing spheres from two open sides of a corresponding one of the receiving holes, respectively.

According to the present invention the continuously variable transmission mechanism, the speed-changing frame comprises two speed-changing half-frames connected together, and the speed-changing half-frames each have a plurality of receiving half-holes, a plurality of cruciform guide half-slots, and a plurality of guide half-slots, which are connected to form the receiving holes, the cruciform guide slots, and the guide slots, respectively.

According to an embodiment of the present invention the continuously variable transmission mechanism, the speed-changing spheres each have has two limiting lubricative washers and a lubricative washer, with the lubricative washer disposed between the limiting lubricative washers, allowing the speed-changing rods to be movably, penetratingly disposed at the limiting lubricative washers and the lubricative washers, respectively.

According to an embodiment of the present invention the continuously variable transmission mechanism, the oblique supporters are each T-shaped and have protruding portions penetrating the truncated conical ball rings and the oblique support rings to connect with a side of the speed-changing frame.

According to an embodiment of the present invention the continuously variable transmission mechanism, the protruding portions of the oblique supporters each have a plurality of extending guide slots arranged annularly and in communication with the guide slots, respectively.

According to an embodiment of the present invention the continuously variable transmission mechanism, the power input rotator has a first axle, and the power output rotator has a second axle, with the first and second axles each pivotally connected to the oblique supporters.

Therefore, the present invention provides a continuously variable transmission mechanism which is compact and capable of not only achieving large continuously variable transmission ranges and high transmission efficiency but also changing speed without causing jerks.

### BRIEF DESCRIPTION OF THE DRAWINGS

Objectives, features, and advantages of the present invention are hereunder illustrated with specific embodiments in conjunction with the accompanying drawings, in which:
FIG. 1 is a perspective view 1 of a continuously variable transmission mechanism according to a preferred embodiment of the present invention;
FIG. 2 is a perspective view 2 of the continuously variable transmission mechanism according to a preferred embodiment of the present invention;
FIG. 3 is an exploded view 1 of a speed-changing frame according to a preferred embodiment of the present invention;
FIG. 4 is an exploded view 2 of the speed-changing frame according to a preferred embodiment of the present invention;
FIG. 5 is an exploded view 1 of the speed-changing frame and oblique support units according to a preferred embodiment of the present invention;
FIG. 6 is an exploded view 2 of the speed-changing frame and oblique support units according to a preferred embodiment of the present invention;
FIG. 7 is an exploded view 3 of the speed-changing frame and oblique support units according to a preferred embodiment of the present invention;
FIG. 8 is an exploded view 4 of the speed-changing frame and oblique support units according to a preferred embodiment of the present invention;
FIG. 9 is a cutaway view of the continuously variable transmission mechanism shown in FIG. 1;
FIG. 10 is a front view of the continuously variable transmission mechanism shown in FIG. 9; and
FIG. 11 is a perspective view of a ring-shaped driver fitted to the speed-changing frame according to a preferred embodiment of the present invention.

### DETAILED DESCRIPTION OF THE PREFERRED EMBODIMENTS

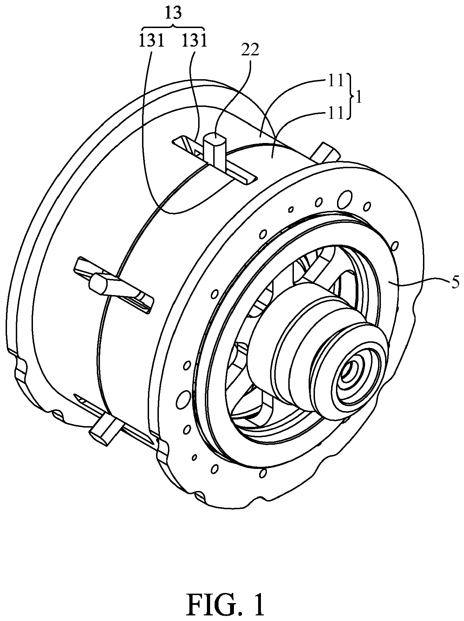

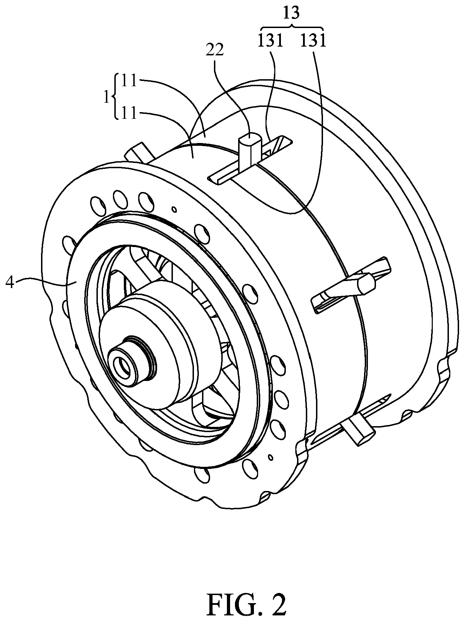

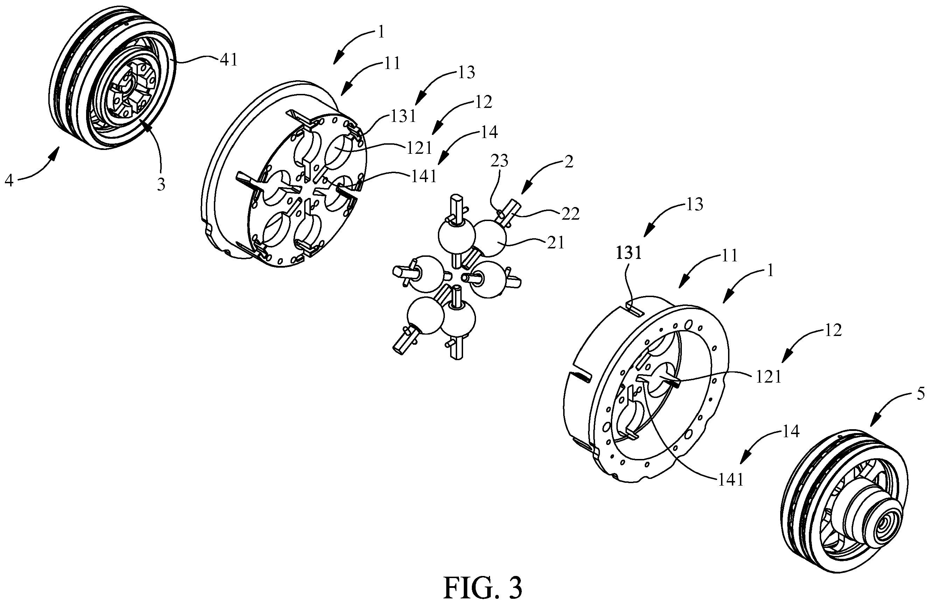

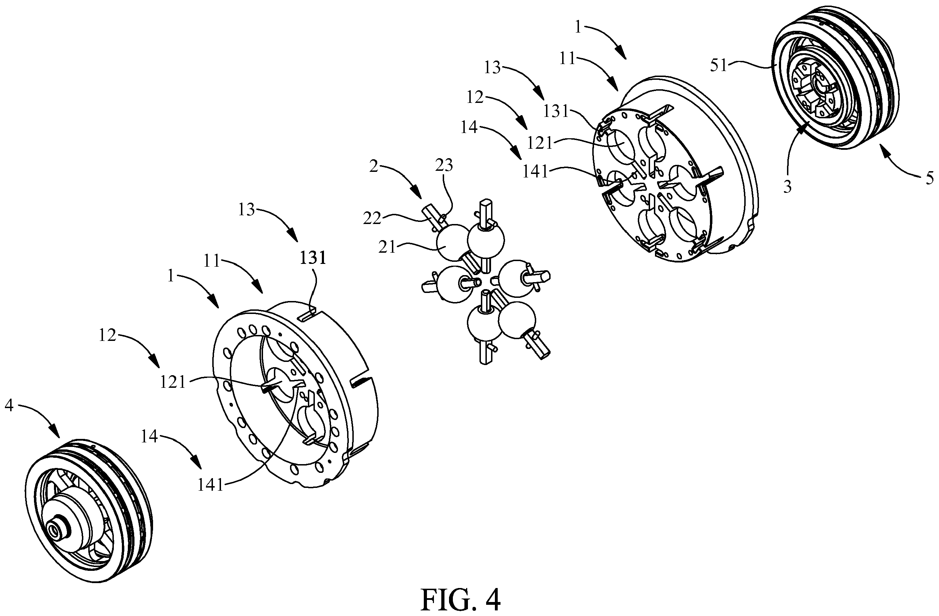

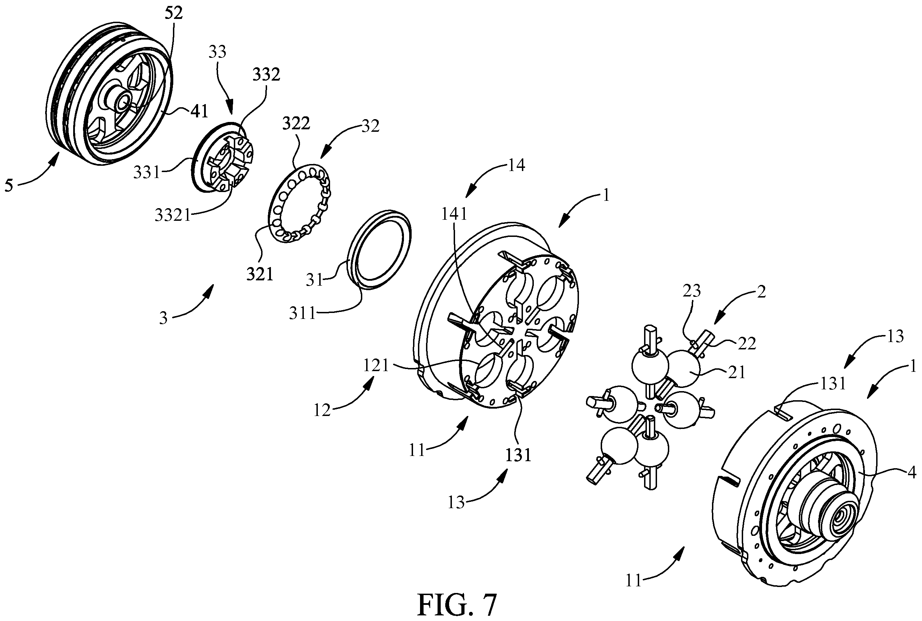

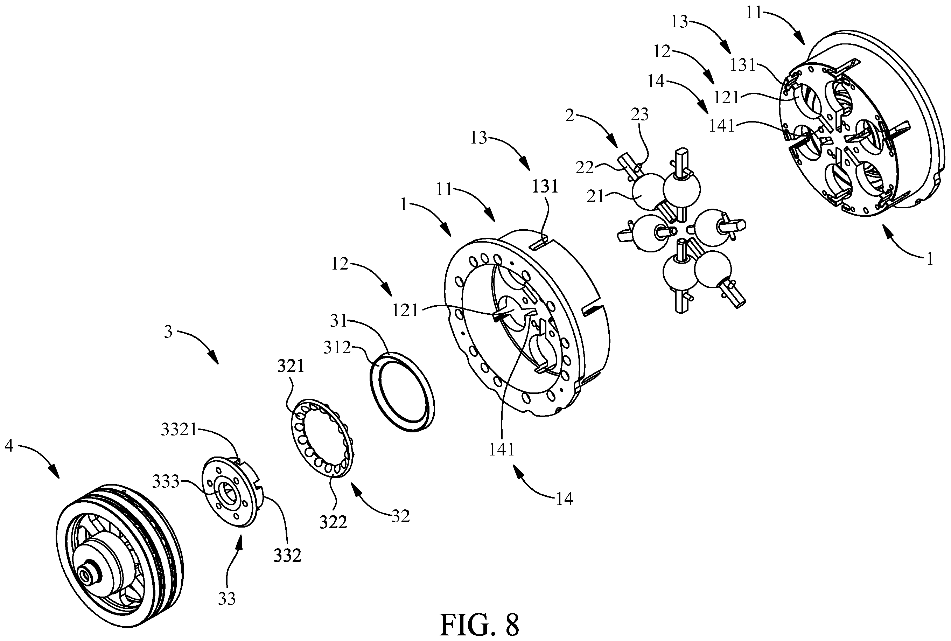

Referring to FIG. 1 through FIG. 10, the present invention provides a continuously variable transmission mechanism which comprises a speed-changing frame 1, a plurality of speed-changing units 2, two oblique support units 3, a power input rotator 4, and a power output rotator 5. The speed-changing frame 1 looks like a vehicle's wheel. A cylindrical recess is disposed on each of the two sides of the speed-changing frame 1. The speed-changing frame 1 has a plurality of receiving holes 12, a plurality of cruciform guide slots 13, and a plurality of guide slots 14. The receiving holes 12 are intermediate and arranged annularly. The cruciform guide slots 13 are outermost and arranged annularly. The guide slots 14 are innermost and arranged annularly. The receiving holes 12 are each disposed between, and in communication with, a corresponding one of the cruciform guide slots 13 and a corresponding one of the guide slots 14. The receiving holes 12 are each round. The speed-changing units 2 each have a speed-changing sphere 21, a speed-changing rod 22, and a speed-changing slide bar 23. The speed-changing rod 22 is movably, penetratingly disposed at the speed-changing sphere 21. The speed-changing slide bar 23 is perpendicularly connected to one end of the speed-changing rod 22, and the one end of the speed-changing rod 22 is exposed from the speed-changing sphere 21. The speed-changing spheres 21 are movably received in the receiving holes 12, respectively. Each speed-changing sphere 21 is exposed from two open sides of the corresponding receiving hole 12. The speed-changing slide bar 23 and the speed-changing rod 22 are exposed from one end portion of the speed-changing sphere 21 and are each slidingly disposed at a transverse part and a longitudinal part of a corresponding one of the cruciform guide slots 13. With the speed-changing rod 22 being exposed from one end portion of the speed-changing sphere 21, the speed-changing rod 22 is exposed from the speed-changing frame 1. The speed-changing rod 22 is exposed from the other end portion of the speed-changing sphere 21 and slidingly disposed at a corresponding one of the guide slots 14. The oblique support units 3 each have an oblique support ring 31, a truncated conical ball ring 32, and an oblique supporter 33. Each of the two sides of each oblique support ring 31 has an outward-tilted support annular surface 311 and an inward-tilted clamping annular surface 312. Each oblique supporter 33 has an outward-tilted clamping annular surface 331. The oblique supporters 33 are each connected to the cylindrical recesses on the two sides of the speed-changing frame 1. Each truncated conical ball ring 32 has a plurality of balls 321 and a truncated conical ring 322. The balls 321 are spaced apart and movably received in the truncated conical ring 322. The truncated conical ball rings 32 are each clamped between a corresponding one of the inward-tilted clamping annular surfaces 312 and a corresponding one of the outward-tilted clamping annular surfaces 331. The outward-tilted support annular surfaces 311 support inner edges of the speed-changing spheres 21 from two open sides of a corresponding one of the receiving holes 12, respectively. The power input rotator 4 has an inward-tilted power input clamping annular surface 41. The power output rotator 5 has an inward-tilted power output clamping annular surface 51. The inward-tilted power input clamping annular surface 41 and the inward-tilted power output clamping annular surface 51 clamp outer edges of the speed-changing spheres 21 from two open sides of a corresponding one of the receiving holes 12, respectively.

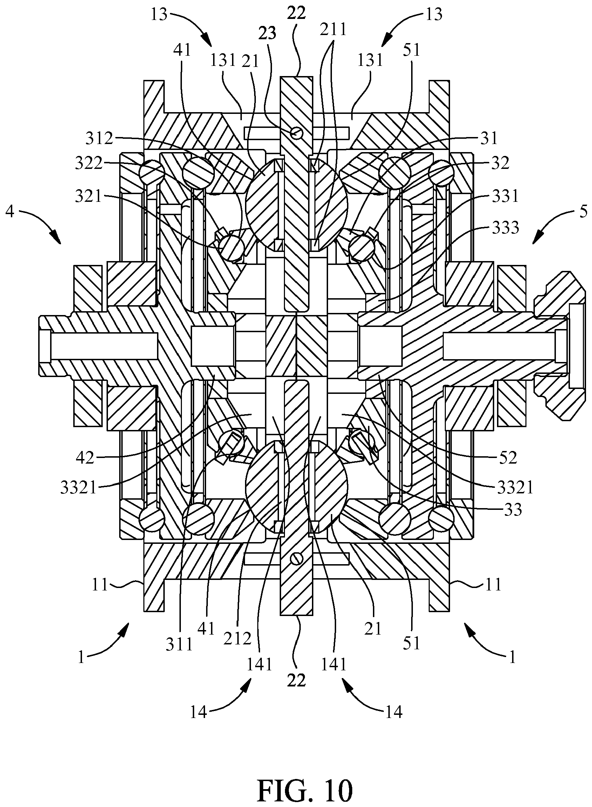

Referring to FIG. 10, rotation of the power input rotator 4 and rightward slide of the speed-changing slide bars 23 causes the speed-changing rods 22 and the speed-changing spheres 21 to turn rightward, the speed-changing rods 22 to slide relative to the speed-changing spheres 21, the power output rotator 5 to rotate in a direction opposite to the direction of rotation of the power input rotator 4, and the power output rotator 5 to rotate more slowly than the power input rotator 4, so as to attain deceleration. Rotation of the power input rotator 4 and leftward slide of the speed-changing slide bars 23 causes the speed-changing rods 22 and the speed-changing spheres 21 to turn leftward, the speed-changing rods 22 to slide relative to the speed-changing spheres 21, the power output rotator 5 to rotate in a direction opposite to the direction of rotation of the power input rotator 4, and the power output rotator 5 to rotate faster than the power input rotator 4, so as to attain acceleration.

Referring to FIG. 10, the speed-changing spheres 21 are movably clamped between the inward-tilted power input clamping annular surface 41, the inward-tilted power output clamping annular surface 51, and the outward-tilted support annular surface 311 to allow the speed-changing spheres 21 to be each clamped at only four points, minimize friction, enhance transmission efficiency, thereby changing speed without causing jerks. The speed-changing frame 1, the speed-changing units 2 and the oblique support units 3 are clamped between the inward-tilted power input clamping annular surface 41 of the power input rotator 4 and the inward-tilted power output clamping annular surface 51 of the power output rotator 5 and thus float between the power input rotator 4 and the power output rotator 5; hence, all the aforesaid components are still in well contact with each other at the time of commencement of the rotation of the power input rotator 4, the rotation of the power input rotator 4, and the turning of the speed-changing units 2, thereby ensuring high transmission efficiency. Furthermore, according to the present invention, the continuously variable transmission mechanism is compact and capable of achieving large continuously variable transmission ranges, because the speed-changing units 2 can turn by a large angle.

Referring to FIG. 1 through FIG. 10, the speed-changing frame 1 comprises two speed-changing half-frames 11 connected together. The speed-changing half-frames 11 each have a plurality of receiving half-holes 121, a plurality of cruciform guide half-slots 131, and a plurality of guide half-slots 141, which are connected to form the receiving holes 12, the cruciform guide slots 13, and the guide slots 14, respectively. Hence, the continuously variable transmission mechanism of the present invention is easy to assemble, whereas the speed-changing spheres 21 float within the receiving holes 12 and connect pivotally therewith through the speed-changing slide bars 23 and the speed-changing rods 22.

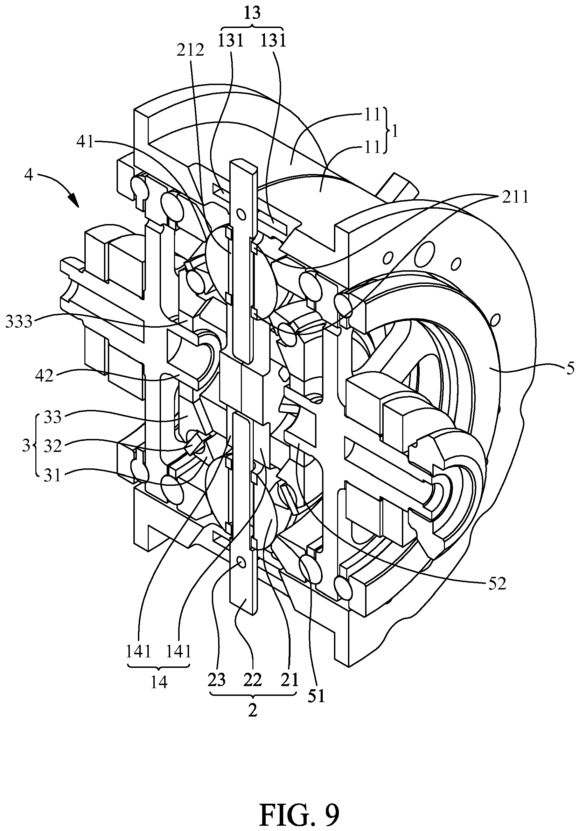

Referring to FIG. 9 and FIG. 10, the speed-changing spheres 21 each have therein two limiting lubricative washers 211 and a lubricative washer 212. The limiting lubricative washers 211 are self-lubricating washers. The lubricative washers 212 are self-lubricating washers. The speed-changing rods 22 are movably, penetratingly disposed at the limiting lubricative washers 211 and the lubricative washers 212, respectively. The speed-changing rods 22 slide relative to the speed-changing spheres 21 and reduce friction by the limiting lubricative washers 211 and the lubricative washers 212.

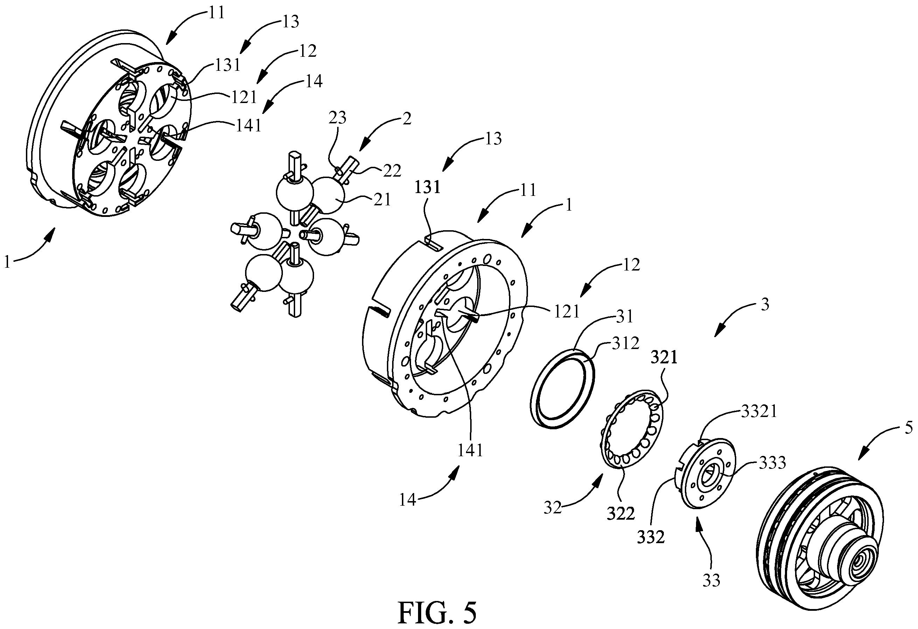

Referring to FIG. 5 through FIG. 8, the oblique supporters 33 are each T-shaped and have protruding portions 332 penetrating the truncated conical ball rings 32 and the oblique support rings 31 to connect with a cylindrical recess on one side of the speed-changing frame 1. Therefore, the continuously variable transmission mechanism of the present invention is easy to assemble, because the speed-changing spheres 21 can be easily mounted on the speed-changing frame 1.

Referring to FIG. 5 through FIG. 8, the protruding portions 332 of the oblique supporters 33 each have a plurality of extending guide slots 3321 arranged annularly. The extending guide slots 3321 are in communication with the guide slots 14, respectively. Therefore, the continuously variable transmission mechanism of the present invention increases the angle by which the speed-changing units 2 can turn.

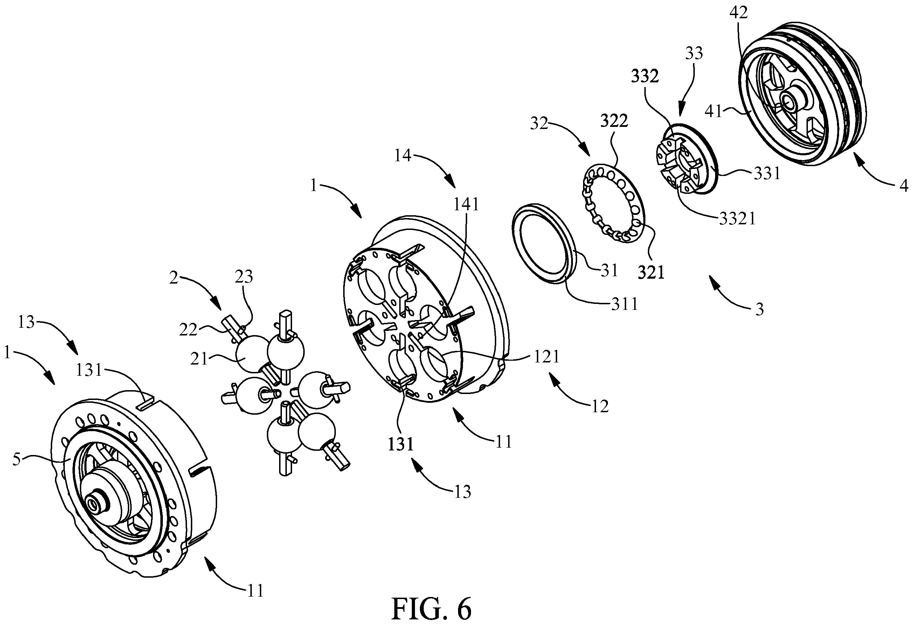

Referring to FIG. 6, FIG. 7, FIG. 9 and FIG. 10, the power input rotator 4 has a first axle 42, whereas the power output rotator 5 has a second axle 52. The first axle 42 and the second axle 52 are each pivotally connected to the oblique supporters 33 through a bearing 333. Therefore, the continuously variable transmission mechanism of the present invention is characterized in that the speed-changing frame 1, the speed-changing units 2, and the oblique support units 3 are firmly connected between the power input rotator 4 and the power output rotator 5.

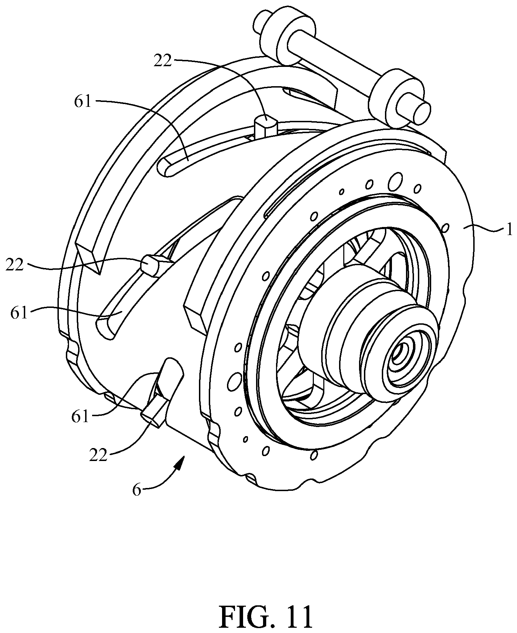

Referring to FIG. 1, FIG. 10 and FIG. 11, the continuously variable transmission mechanism further comprises a ring-shaped driver 6. The ring-shaped driver 6 has a plurality of oblique guide holes 61. The ring-shaped driver 6 is fitted to the speed-changing frame 1. The oblique guide holes 61 each guide the speed-changing rods 22 out of an end portion of the speed-changing frame 1. Therefore, as soon as the ring-shaped driver 6 rotates clockwise or counterclockwise relative to the speed-changing frame 1, the speed-changing rods 22 are guided by the oblique guide holes 61, respectively, such that the speed-changing rods 22 and the speed-changing spheres 21 turn leftward or turn rightward.

## Claims

1. A continuously variable transmission mechanism, comprising:
a speed-changing frame (1);
a plurality of speed-changing units (2) each having a speed-changing sphere (21), a speed-changing rod (22), and a speed-changing slide bar (23), with the speed-changing rod (22) movably, penetratingly disposed at the speed-changing sphere (21), the speed-changing slide bar (23) perpendicularly connected to an end of the speed-changing rod (22), the end exposed from an end portion of the speed-changing sphere (21);
a power input rotator (4) having an inward-tilted power input clamping annular surface (41); and
a power output rotator (5) having an inward-tilted power output clamping annular surface (51),
**characterized in that** the speed-changing frame (1) comprising two speed-changing half-frames (11) connected together;
and **in that** the continuously variable transmission mechanism further comprises two oblique support units (3) each having an oblique support ring (31), a truncated conical ball ring (32), and an oblique supporter (33), the oblique support rings (31) each having an outward-tilted support annular surface (311) and an inward-tilted clamping annular surface (312), the oblique supporters (33) each having an outward-tilted clamping annular surface (331) and connected to two sides of the speed-changing frame (1), and the truncated conical ball rings (32) each being clamped between a corresponding one of the inward-tilted clamping annular surfaces (312) and a corresponding one of the outward-tilted clamping annular surfaces (331), wherein the outward-tilted support annular surfaces (311) support the speed-changing spheres (21) from two open sides of a corresponding one of the receiving holes (12), respectively;
wherein the speed-changing frame (1) has a plurality of receiving holes (12), a plurality of cruciform guide slots (13), and a plurality of guide slots (14), the receiving holes (12) being intermediate and arranged annularly, the cruciform guide slots (13) being outermost and arranged annularly, and the guide slots (14) being innermost and arranged annularly, wherein the receiving holes (12) are each disposed between, and in communication with, a corresponding one of the cruciform guide slots (13) and a corresponding one of the guide slots (14);
wherein the speed-changing spheres (21) movably received in the receiving holes (12), respectively, with each said speed-changing sphere (21) exposed from two open sides of the corresponding receiving hole (12), wherein the speed-changing slide bars (23) and the speed-changing rods (22) are exposed from end portions of the speed-changing spheres (21) and slide within the cruciform guide slots (13), respectively, whereas the speed-changing rods (22) are exposed from other end portions of the speed-changing spheres (21) and slide within the guide slots (14), respectively;
wherein the inward-tilted power input clamping annular surface (41) and the inward-tilted power output clamping annular surface (51) clamp the speed-changing spheres (21) from two open sides of a corresponding one of the receiving holes (12), respectively; and
wherein the speed-changing half-frames (11) each have a plurality of receiving half-holes (121), a plurality of cruciform guide half-slots (131), and a plurality of guide half-slots (141), which are connected to form the receiving holes (12), the cruciform guide slots (13), and the guide slots (14), respectively.

2. The continuously variable transmission mechanism of claim 1, wherein the speed-changing spheres (21) each has two limiting lubricative washers (211) and a lubricative washer (212), with the lubricative washer (212) disposed between the limiting lubricative washers (211), allowing the speed-changing rods (22) to be movably, penetratingly disposed at the limiting lubricative washers (211) and the lubricative washers (212), respectively.

3. The continuously variable transmission mechanism of claim 1, wherein the oblique supporters (33) are each T-shaped and have protruding portions (332) penetrating the truncated conical ball rings (32) and the oblique support rings (31) to connect with a side of the speed-changing frame (1).

4. The continuously variable transmission mechanism of claim 3, wherein the protruding portions (332) of the oblique supporters (33) each have a plurality of extending guide slots (3321) arranged annularly and in communication with the guide slots (13), respectively.

5. The continuously variable transmission mechanism of claim 1, wherein the power input rotator (4) has a first axle (42), and the power output rotator (5) has a second axle (52), with the first and second axles (42, 52) each pivotally connected to the oblique supporters (33).

## Patentansprüche

1. Ein stufenloses Getriebe, umfassend: einen Geschwindigkeitswechselrahmen (1)
eine Vielzahl von Drehzahländerungseinheiten (2), die jeweils eine Drehzahländerungskugel (21), eine Drehzahländerungsstange (22) und eine Drehzahländerungsschiene (23) aufweisen, wobei die Drehzahländerungsstange (22) beweglich, eindringend an der Drehzahländerungskugel (21) angeordnet ist, wobei die Drehzahländerungsschiene (23) senkrecht mit einem Ende der Drehzahländerungsstange (22) verbunden ist, wobei das Ende von einem Endabschnitt der Drehzahländerungskugel (21) freigelegt ist;
einen Leistungseingangsrotor (4) mit einer nach innen geneigten Leistungseingangsklemmringfläche (41);
und
einen Leistungsausgangsrotor (5) mit einer nach innen geneigten Leistungsausgangsklemmring der ringförmigen Oberfläche (51),
**dadurch gekennzeichnet, dass** der Geschwindigkeitsänderungsrahmen (1) zwei miteinander verbundene, geschwindigkeitsändernde Halbrahmen (11) umfasst;
und dass der stufenlose Getriebemechanismus ferner umfasst zwei schräge Stützeinheiten (3), die jeweils einen schrägen Stützring (31), einen kegelstumpfförmigen Kugelring (32) und einen schrägen Träger (33) aufweisen, wobei die schrägen Stützringe (31) jeweils eine nach außen geneigte Stützringfläche (311) und eine nach innen geneigte Klemmringfläche (312) aufweisen, wobei die schrägen Träger (33) jeweils eine nach außen geneigte Klemmringfläche (331) aufweisen und mit zwei Seiten des Geschwindigkeitswechselrahmens (1) verbunden sind, und die kegelstumpfförmigen Kugelringe (32), die jeweils zwischen einer entsprechenden der nach innen geneigten Klemmringflächen (312) und einer entsprechenden der nach außen geneigten Klemmringflächen (331) eingespannt sind, wobei die nach außen geneigten Stützringflächen (311) die geschwindigkeitsändernden Kugeln (21) von zwei offenen Seiten einer entsprechenden der Aufnahmebohrungen (12) abstützen;
wobei der Geschwindigkeitsänderungsrahmen (1) eine Vielzahl von Aufnahmebohrungen (12), eine Vielzahl von kreuzförmigen Führungsschlitzen (13) und eine Vielzahl von Führungsschlitzen (14) aufweist, wobei die Aufnahmebohrungen (12) zwischenliegend und ringförmig angeordnet sind, wobei die kreuzförmigen Führungsschlitze (13) äußersten und ringförmig angeordnet sind und die Führungsschlitze (14) innersten und ringförmig angeordnet sind, wobei die Aufnahmebohrungen (12) jeweils zwischen einem entsprechenden der kreuzförmigen Führungsschlitze (13) und einem entsprechenden der Führungsschlitze (14) angeordnet sind und in Verbindung damit stehen;
wobei die geschwindigkeitsändernden Kugeln (21) beweglich in den Aufnahmebohrungen (12) aufgenommen sind, wobei jede der geschwindigkeitsändernden Kugeln (21) von zwei offenen Seiten des entsprechenden Aufnahmelochs (12) freiliegt, wobei die geschwindigkeitsändernden Gleitschienen (23) und die geschwindigkeitsändernden Stangen (22) von Endabschnitten der geschwindigkeitsändernden Kugeln (21) freigelegt sind und jeweils innerhalb der kreuzförmigen Führungsschlitze (13) gleiten, während die geschwindigkeitsändernden Stangen (22) von anderen Endabschnitten der geschwindigkeitsändernden Kugeln (21) freigelegt sind und jeweils innerhalb der Führungsschlitze (14) gleiten;
wobei die nach innen geneigte Leistungseingangsklemmringfläche (41) und die nach innen geneigte Leistungsausgangsklemmringfläche (51) die geschwindigkeitsändernden Kugeln (21) von zwei offenen Seiten einer entsprechenden der Aufnahmebohrungen (12) klemmen; und
wobei die geschwindigkeitsändernden Halbrahmen (11) jeweils eine Vielzahl von Aufnahmehalblöchern (121), eine Vielzahl von kreuzförmigen Führungshalbschlitzen (131) und eine Vielzahl von Führungshalbschlitzen (141) aufweisen, die miteinander verbunden sind, um die Aufnahmeöffnungen (12), die kreuzförmigen Führungsschlitze (13) und die Führungsschlitze (14) zu bilden.

2. Das stufenlose Getriebe nach Anspruch 1, wobei die Drehzahländerungskugeln (21) jeweils zwei begrenzende Schmierscheiben (211) und eine Schmierscheibe (212) aufweisen, wobei die Schmierscheibe (212) zwischen den begrenzenden Schmierscheiben (211) angeordnet ist, wodurch die Drehzahländerstäbe (22) beweglich, durchdringend an den begrenzenden Schmierscheiben (211) bzw. den Schmierscheiben (212) angeordnet sein können.

3. Stufenloses Getriebe nach Anspruch 1, wobei die schrägen Träger (33) jeweils T-förmig sind und vorstehende Abschnitte (332) aufweisen, die in die kegelstumpfförmigen Kugelringe (32) und die schrägen Stützringe (31) eindringen, um mit einer Seite des Geschwindigkeitswechselrahmens zu verbinden

4. Der stufenlose Getriebemechanismus nach Anspruch 3, wobei die vorstehenden Abschnitte (332) der schrägen Träger (33) jeweils eine Vielzahl von sich erstreckenden Führungsschlitzen (3321) aufweisen, die ringförmig und in Verbindung mit den Führungsschlitzen (13) angeordnet sind.

5. Der stufenlose Getriebemechanismus nach Anspruch 1, wobei der Leistungseingangsdreher (4) eine erste Achse (42) aufweist, und der Leistungsdreher (5) eine zweite Achse (52) aufweist, wobei die erste und zweite Achse (42, 52) jeweils schwenkbar mit den schrägen Trägern (33) verbunden sind.

## Revendications

1. Mécanisme de transmission variable en continu, comprenant :
une structure de changement de vitesse (1) ;
une pluralité de dispositifs de changement de vitesse (2) chacun possédant une bille de changement de vitesse (21), une tige de changement de vitesse (21), et une glissière de changement de vitesse (23), ladite tige de changement de vitesse (22) étant mobile et étant disposée pour pénétrer au niveau de la bille de changement de vitesse (21), la glissière de changement de vitesse (23) étant raccordée perpendiculairement à une extrémité de la tige de changement de vitesse (22), ladite extrémité étant exposée à partir d'une portion d'extrémité de la bille de changement de vitesse (21) ;
un rotateur d'entrée de puissance (4) ayant une surface annulaire de serrage d'entrée de puissance inclinée vers l'intérieur (41) ; et
un rotateur de sortie de puissance (5) ayant une surface annulaire de serrage de sortie de puissance inclinée vers l'intérieur (51),
**caractérisé en ce que** la structure de changement de vitesse (1) comprend deux demi-structures de changement de vitesse raccordées ensemble ;
et **en ce que** le mécanisme de transmission variable en continu comprend en outre deux dispositifs de support oblique (3), chacun ayant un anneau de support oblique (31), un anneau à billes tronconique (32), et un support oblique (33), les anneaux de support obliques (31) ayant chacun une surface annulaire de support inclinée vers l'extérieur (311) et une surface annulaire de serrage inclinée vers l'intérieur (312), les supports obliques (33) ayant chacun une surface annulaire de serrage inclinée vers l'extérieur (331) et étant raccordés à deux côtés de la structure de changement de vitesse (1), et les anneaux à billes tronconiques (32) étant, chacun, serrés entre une surface correspondante des surfaces annulaires de serrage inclinées vers l'intérieur (312) et une surface correspondante des surfaces annulaires de serrage inclinées vers l'extérieur (331), dans lequel les surfaces annulaires de support inclinées vers l'extérieur (311) supportent les billes de changement de vitesse (21) depuis deux côtés ouverts d'un orifice de réception (12) correspondant, respectivement ;
dans lequel la structure de changement de vitesse possède une pluralité d'orifices de réception (12), une pluralité de fentes de guidage cruciformes (13), et une pluralité de fentes de guidage (14), les orifices de réception (12) étant intermédiaires et agencés de manière annulaire, les fentes de guidage cruciformes (13) étant situées le plus à l'extérieur et agencées de manière annulaire, et les fentes de guidage (14) étant situées le plus à l'intérieur et agencées de manière annulaire, dans lequel les orifices de réception (12) sont, chacun, disposés entre et en communication avec une fente correspondante des fentes de guidage cruciformes (13) et une fente correspondante des fentes de guidage (14) ;
dans lequel les billes de changement de vitesse (21) reçues, en mouvement, dans les orifices de réception (12), respectivement, chacune desdites billes de changement de vitesse (21) étant exposée à partir de deux côtés ouverts de l'orifice de réception (12) correspondant, dans lequel les glissières de changement de vitesse (23) et les tiges de changement de vitesse (22) sont exposées à partir des portions d'extrémité des billes de changement de vitesse (21) et coulissent à l'intérieur des fentes de guidage cruciformes (13), respectivement, tandis que les tiges de changement de vitesse (22) sont exposées depuis d'autres parties d'extrémité des billes de changement de vitesse (21) et coulissent à l'intérieur des fentes de guidage (14), respectivement ;
dans lequel la surface annulaire de serrage d'entrée de puissance inclinée vers l'intérieur (41) et la surface annulaire de serrage de sortie de puissance inclinée vers l'intérieur (51) serrent les billes de changement de vitesse (21) à partir de deux côtés ouverts d'un orifice correspondant des orifices de réception (12), respectivement ; et
dans lequel les demi-structures de changement de vitesse (11) ont, chacune, une pluralité de demi-orifices de réception (121), une pluralité de demi-fentes de guidage cruciformes (131), et une pluralité de demi-fentes de guidage (141), qui sont raccordées pour former les orifices de réception (12), les fentes de guidage cruciformes (13), et les fentes de guidage (14), respectivement.

2. Mécanisme de transmission variable en continu selon la revendication 1, dans lequel les billes de changement de vitesse (21) possèdent, chacune, deux rondelles de graissage de butée (211) et une rondelle de graissage (212), ladite rondelle de graissage (212) étant disposée entre les rondelles de graissage de butée (211), en permettant aux tiges de changement de vitesse (22) d'être mobiles, en étant disposées pour pénétrer au niveau des rondelles de graissage de butée (211) et des rondelles de graissage (212), respectivement.

3. Mécanisme de transmission variable en continu selon la revendication 1, dans lequel les supports obliques (33) ont, chacun, une forme de T et possèdent des parties en saillie (332) qui pénètrent dans les anneaux à billes tronconiques (32) et les anneaux de support obliques (31) pour se raccorder sur un côté de la structure de changement de vitesse (1).

4. Mécanisme de transmission variable en continu selon la revendication 3, dans lequel les parties en saillie (332) des supports obliques (33) ont, chacun, une pluralité de fentes de guidage allongées (3321) agencées de manière annulaire et en communication avec les fentes de guidage (13), respectivement.

5. Mécanisme de transmission variable en continu selon la revendication 1, dans lequel le rotateur d'entrée de puissance (4) possède un premier axe (42), et le rotateur de sortie de puissance (5) possède un second axe (52), lesdits premier et second axes (42, 52) étant, chacun, raccordés par pivotement aux supports obliques (33).
